Europäisches Patentamt

European Patent Office

Office européen des brevets

(11) Veröffentlichungsnummer: **0 429 784 A2**

# (12) EUROPÄISCHE PATENTANMELDUNG

(21) Anmeldenummer: 90117699.0

(22) Anmeldetag: 14.09.90

(51) Int. Cl.⁵: **E04F 13/08**

(30) Priorität: 17.11.89 DE 3938190

(43) Veröffentlichungstag der Anmeldung:
05.06.91 Patentblatt 91/23

(84) Benannte Vertragsstaaten:
**AT BE CH DE DK ES FR GB IT LI NL**
**Patentblatt**

(71) Anmelder: **fischer-werke Artur Fischer GmbH**
**& Co. KG**
**Weinhalde 14-18**
**W-7244 Waldachtal 3/Tumlingen(DE)**

(72) Erfinder: **Fischer, Artur h.c., Prof. Dr.**
**Weinhalde 34**
**W-7244 Waldachtal 3/Tumlingen(DE)**

(54) Befestigungseinheit.

(57)
2.1. Es sind Befestigungen von aus Profilschienen bestehenden Einhängeelementen, die an Fassadenplatten befestigt sind bekannt. Diese erstrecken sich aus Stabilitätsgründen regelmäßig über die gesamte Länge der Fassadenplatten, wobei die Einhängeelemente an mehreren Punkten der Fassadenplatte an dieser befestigt sind.

2.2. Es wird eine Befestigungseinheit vorgeschlagen bei der das Einhängeelement sich lediglich noch über einen gewissen Bereich der Fassadenplatte erstreckt und die Einhängeelemente jeweils mit einem Befestigungsanker an der Fassadenplatte befestigt sind. Zur Stabilisierung der Verankerung der Fassadenplatte am Einhängeelement ist in dem zwischen der Fassadenplatte und dem Einhängeelement befindlichen Hohlraum ein elastisches Abstützelement vorgesehen.

Fig.1

EP 0 429 784 A2

## BEFESTIGUNGSEINHEIT

Die Erfindung betrifft eine Befestigungseinheit, insbesondere für die Montage von Fassadenplatten an einer Grundkonstruktion, gemäß der Gattung des Hauptanspruchs.

Bekannte Befestigungen von Fassadenplatten an einer Grundkonstruktion sehen vor, daß an der Fassadenplatte ein, regelmäßig aus einer Profilschiene bestehendes, Einhängeelement angeordnet ist, mit dem die Fassadenplatte an einem entsprechenden Aufnahmeelement der Grundkonstruktion eingehängt und auf diese Weise an der Grundkonstruktion befestigt wird. Die Einhängeelemente sind dabei regelmäßig entlang der oberen und unteren Längsseite der Fassadenplatten vorgesehen und an diesen durch zumindest in vier Bohrungen befindliche Befestigungsanker im Eckbereich der Fassadenplatten befestigt. Die Erstreckung des Einhängeelements über die gesamte Länge der jeweiligen Fassadenplatte ist erforderlich, um eine gegen äußere Einflüsse gesicherte stabile Verankerung der Fassadenplatte zu erreichen.

Nachteilig an dieser Art der Befestigung ist insbesondere der hohe Materialaufwand, da jeweils sich über die gesamte Längsseite erstreckende Einhängeelemente benötigt werden, die durch zumindest zwei Befestigungsanker an jeder Längsseite an der Fassadenplatte befestigt sind.

Der Erfindung liegt die Aufgabe zugrunde, eine Befestigungseinheit für die Montage von Fassadenplatten an einer Grundkonstruktion zu schaffen, die eine einfache Montage bei möglichst geringem Materialaufwand ermöglicht und eine stabile Befestigung der Fassadenplatten gewährleistet.

Die Lösung dieser Aufgabe wird durch die im Hauptanspruch angegebenen Merkmale erhalten. Durch die Anordnung eines elastischen Abstützelements in dem zwischen dem Einhängeelement und der Fassadenplatte vorhandenen Hohlraum ist es möglich, jeweils an der oberen und unteren Längsseite der Fassadenplatte ein kurzes Einhängeelement anzuordnen, das jeweils nur durch einen Befestigungsanker an der Fassadenplatte gehalten ist. Das Erfordernis einer sich über die gesamte Länge der Fassadenplatte erstreckende Profilschiene entfällt somit.

Die Stabilität der Befestigung der Fassadenplatte ist dadurch gewährleistet, daß das in dem zwischen Fassadenplatte und Einhängeelement bestehenden Hohlraum angeordnete Abstützelement sich bis an die seitlichen Stirnseiten der Fassadenplatte erstreckt. Durch die von den seitlichen Stirnseiten der Fassadenplatte zum an dieser befestigten Einhängeelement konkav zulaufenden Wölbung des Abstützelements wird dabei die erforderliche Stabilität der Befestigung auch im Bereich der seitlichen Stirnseiten der Fassadenplatte erreicht.

Durch die mittels des elastischen Abstützelements erhaltene stabile Befestigung der Fassadenplatte werden auch Beschädigungen vermieden, die insbesondere im Bereich des Befestigungsankers dadurch auftreten könnten, daß die Fassadenplatte durch Einwirkungen auf ihren seitlichen Bereich bewegt werden könnte.

Durch die Ausformung des elastischen Abstützelements wird ebenfalls ein Ablaufen von Regen, Kondenswasser oder dergleichen an der Rückseite der Fassadenplatte ermöglicht, da sie einen vertikalen Abfluß zuläßt.

Die Erfindung wird nachfolgend anhand der Zeichnung näher erläutert.

Es zeigen:

Figur 1 ein Ausführungsbeispiel der erfindungsgemäßen Befestigungseinheit, räumlich dargestellt und

Figur 2 das in Figur 1 dargestellte Befestigungselement in montiertem Zustand, zum Teil im Querschnitt dargestellt.

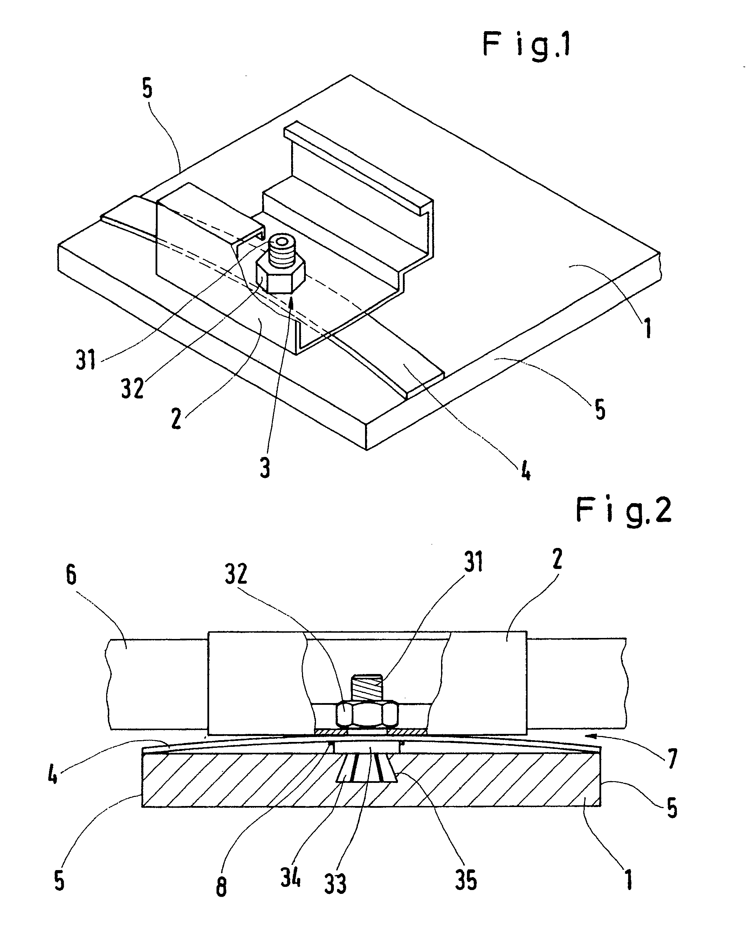

Figur 1 zeigt das auf der Rückseite einer Fassadenplatte 1 montierte Einhängeelement 2, das aus einer Profilschiene besteht. Das Einhängeelement 2 ist mittels eines Befestigungsankers 3 auf der Fassadenplatte 1 befestigt. In dem zwischen der Fassadenplatte 1 und dem Einhängeelement 2 befindlichen Hohlraum ist das elastische Abstützelement 4 angeordnet. Dieses verläuft von den seitlichen Stirnseiten 5 ausgehend zu dem Befestigungsanker 3 in konkav gewölbter Form.

Der Befestigungsanker 3 besitzt einen Gewindebolzen 31 auf den eine Schraubenmutter 32 aufgeschraubt ist. Wie in Figur 2 ersiohtlich ist, drückt die Schraubenmutter 32 das federelastische Abstützelement 4 gegen den unteren Teil 33 des Befestigungsankers, wo seitliche Zentrierelemente 8 abstehen, die formschlüssig an dem Abstützelement 4 angreifen. Auf diese Weise wird das Abstützelement 4 in der in Figur 1 dargestellten Position sicher gehalten. Weiterhin zeigt Figur 2, daß der Befestigungsanker 3 mit einer kegelförmigen bzw. konischen Erweiterung 34 in ein entsprechend hinterschnittenes Sackloch 35 der Fassadenplatte 1 eingreift. Die formschlüssige Verbindung zwischen Befestigungsanker 3 und Fassadenplatte 1 kann im Bereich des Sacklochs 35 durch Aufspreizen des Teils 34 und/oder Verkleben erfolgen.

Aus Figur 2 ist die Fassadenplatte 1 im Querschnitt ersichtlich. In dieser liegt der Befestigungsanker 3 ein. Die Fassadenplatte 1 ist mittels des Befestigungsankers 3 am Einhängeelement 2 angeordnet, das in teilweise geschnitterner Form dargestellt ist. Mittels des Einhängeelements 2 wird die Fassadenplatte am Aufnahmeelement 6 einer Grundkonstruktion eingehängt. Die stabile Lagerung der Fassadenplatte 1 am Einhängeelement 2 wird durch das im zwischen Fassadenplatte 1 und Einhängeelement 2 befindlichem Hohlraum 7 einliegenden Abstützelement 4 bewirkt. Eine Zentrierung des Abstützelementes 4 ist durch im Bereich der Schraube 31 angeordnete Zentrierelemente 8 ermöglicht.

Bei der Montage der Befestigungseinheit wird zwischen die Fassadenplatte 1 und das Einhängeelement 2 das Abstützelement 4 eingebracht und mittels des Befestigungsankers 3 am Einhängeelement befestigt. Mittels des Einhängeelements 2 wird die Fassadenplatte 1 dann am Aufnahmeelement 6 der Grundkonstruktion eingehängt. Das von seitlichen Stirnseiten 5 der Fassadenplatte 1 zum Einhängeelement 2 konkav gewölbt zulaufende Abstützelement 4 gewährleistet eine stabile Halterung der Fassadenplatte 1 am Befestigungselement 2, obwohl diese lediglich an einem Punkt des Einhängeelement 2 zentriert ist. Das Abstützelement 4 kann aus Kunststoff oder Metall gefertigt sein.

## Ansprüche

1. Befestigungseinheit, insbesondere für die Montage von Fassadenplatten an einer Grundkonstruktion, bestehend aus zumindest einer an ihrer Rückseite mittels Befestigungsankern an einem Einhängeelement angeordneten Fassadenplatte, die mit dem Einhängeelement an der Grundkonstruktion eingehängt ist, **dadurch gekennzeichnet, daß** zwischen dem Einhängeelement (2) und der Fassadenplatte (1) ein Hohlraum (7) befindlich ist, in dem am Befestigungsanker (3) ein elastisches Abstützelement (4) angeordnet ist.

2. Befestigungseinheit nach Anspruch 1, **dadurch gekennzeichnet, daß** das Abstützelement (4) aus einem am Befestigungsanker (3) zentrierbaren, zu den seitlichen Stirnseiten (5) der Fassadenplatte (1) sich erstreckenden Federelement besteht.

3. Befestigungseinheit nach Anspruch 1 oder 2, **dadurch gekennzeichnet, daß** das Abstützelement (4) von den seitlichen Stirnseiten (5) der Fassadenplatte (1) ausgehend zum Einhängeelement (2) verlaufend eine konkave Wölbung aufweist.

4. Befestigungseinheit nach einem der vorhergehenden Ansprüche, **dadurch gekennzeichnet, daß** am elastischen Abstützelement (4) im Bereich des Befestigungsankers (3) ein Zentrierelement (8) oder dgl. gleichen angeordnet ist.

5. Befestigungseinheit nach einem der vorhergehenden Ansprüche, **dadurch gekennzeichnet, daß** das Abstützelement (4) aus Kunststoff besteht.

6. Befestigungseinheit nach Anspruch 1, **dadurch gekennzeichnet, daß** das Einhängeelement (2) aus einer Profilschiene besteht.

Fig.1

Fig.2